# EUROPÄISCHE PATENTSCHRIFT

(11) **EP 1 414 636 B1**
(45) Veröffentlichungstag und Bekanntmachung des Hinweises auf die Patenterteilung: **16.12.2009**
(21) Anmeldenummer: 02764793.2
(22) Anmeldetag: 26.07.2002
(51) Int. Cl.: B29C 45/50, F16C 19/52, H02K 5/167

(54) **ELEKROMECHANISCHER LINEARANTRIEB**
ELECTROMECHANICAL LINEAR DRIVE
ENTRAINEMENT LINEAIRE ELECTROMECANIQUE

(30) Priorität: 01.08.2001 AT 11962001
(43) Veröffentlichungstag der Anmeldung: 06.05.2004
(73) Patentinhaber: Sumitomo (SHI) Demag Plastics Machinery GmbH, 90571 Schwaig (DE)
(72) Erfinder: ICKINGER, Georg, Michael, A-8010 Graz (AT)
(74) Vertreter: Rau, Manfred
(86) Internationale Anmeldenummer: PCT/EP2002/008361
(87) Internationale Veröffentlichungsnummer: WO 2003/011562

(56) Entgegenhaltungen:
- EP-B- 0 723 848
- DE-A- 3 941 444
- US-A- 3 508 241
- US-A- 4 811 992
- US-A- 5 289 042

## Beschreibung

Die Erfindung bezieht sich auf einen elektromechanischen Linearantrieb, insbesondere für eine Spritzgießmaschine, nach dem Oberbegriff des Patentanspruchs 1.

Elektroantriebe zur Erzeugung hoher Drehmomente, wie sie als sogenannte High Torque Motore etwa aus der DE 32 13 172 C2 bekannt sind, besitzen einen zumeist einseitig offenen Hohlwellenrotor großen Durchmessers, der mit dem Stator einen engen Magnetspalt mit einer dem Rotordurchmesser entsprechend großen Umfangslänge begrenzt. Problematisch bei derartigen Antrieben ist die exakt zentrische Lagerung des Hohlwellenrotors, da bereits relativ geringe Ausbiegungen des Rotors zu einem Anlaufen am Stator und damit zu einer thermischen oder mechanischen Zerstörung des Antriebs führen können. Demgemäß ist der Rotor bei dem bekannten Hohlwellenantrieb am offenen Rotorende über ein dem Rotordurchmesser entsprechend großes Außenlager drehbar am Motorgehäuse abgestützt, welches im Hinblick auf die enge Magnetspaltbreite als Präzisionslager ausgeführt werden muss, und bei einem weiteren, aus der DE 39 15 526 A1 bekannten Hohlwellenantrieb ist der Rotor einerseits über eine am geschlossenen Rotorende befestigte, im Durchmesser verkleinerte Motorwelle und ein diese aufnehmendes Wälzlager, am offenen Rotorende hingegen ebenfalls über ein dem Rotordurchmesser entsprechend großes Außenlager drehbar gelagert, welches wiederum in baulich aufwändiger und kostspieliger Weise als Präzisionslager ausgebildet sein muss. Ferner ist aus der EP 0 723 848 B1 ein Hohlwellenantrieb bekannt, bei dem der Rotor sowohl an seinem geschlossenen als auch an seinem offenen Ende über große Außenlager gelagert ist, die wiederum als aufwändige und kostspielige Präzisionslager ausgebildet sein müssen. Darüberhinaus sind bei diesem Hohlwellenantrieb zusätzliche Lager im Bereich der über das Rotorende hinausstehenden Motorwelle vorgesehen.

Aufgabe der Erfindung ist es, bei einem elektromechanischen Linearantrieb der eingangs genannten Art den Bauaufwand zu verringern, ohne dass die mechanische Betriebssicherheit selbst unter extremen Belastungen gefährdet wird.

Diese Aufgabe wird erfindungsgemäß durch einen elektromechanischen Linearantrieb mit den im Patentanspruch 1 angegebenen Merkmalen gelöst

Erfindungsgemäß wird aufgrund der spezifischen Lagergestaltung und -anordnung eine auch unter wechselnden Axialbelastungen spielfreie und hochgradig kippstabile, fliegende Drehlagerung des Hohlwellenrotors am Motorgehäuse erzielt, ohne dass es eines konstruktiv aufwändigen Präzisionslagers am offenen Rotorende bedarf, und in Verbindung mit dem Notlaufsystem sichergestellt, dass der Antrieb selbst unter extremen Betriebsbedingungen, etwa infolge eines verschleißbedingten Lagerspiels der Einzellager oder infolge überhöhter Vibrationserscheinungen, wirksam gegen ein Anlaufen des Rotors am Stator und damit gegen eine Beschädigung oder Zerstörung geschützt ist.

In weiterer baulicher Vereinfachung besteht das Notlaufsystem aus einem radial spielbehafteten Notlager mit einem kleiner als der Magnetspalt zwischen dem Rotor und dem Stator des Elektromotors bemessenen Lagerspiel und/oder aus einem den Elektromotor bei einer exzentrischen, jedoch unterhalb der Magnetspaltgröße liegenden Auslenkung des offenen Rotorendes stromlos schaltenden Kontaktsensor. Wahlweise kann als Notlauflager ein berührungsloses, fluiddynamisches oder magnetisches Radiallager im Bereich des offenen Rotorendes vorgesehen sein, welches jedoch normalerweise nicht mitträgt, sondern nur im Notfall wirksam sein und dann auch nur die überhöhten dynamischen Rotorbelastungen abstützen muss.

Gleiches gilt für eine weitere Variante der Erfindung, wonach das Notlaufsystem aus mindestens drei in Umfangsrichtung des Hohlwellenrotors versetzt zueinander im Bereich des freien Rotorendes angeordneten, den Rotor bei einer exzentrischen Auslenkung radial abstützenden Querlagem besteht, die im Hinblick auf die Notlauffunktion als spielbehaftete Wälz-, etwa Kugellager vergleichsweise geringer Abmessungen ausgebildet sein können und daher wesentlich kostengünstiger als die sonst erforderlichen Präzisionslager großen Durchmessers und hoher Tragfähigkeit sind.

Eine weitere Verbesserung der Laufstabilität des Hohlwellenrotors wird dadurch erreicht, dass die Vorspannkraft der beiden den Lagerzapfen aufnehmenden Einzellager größer bemessen ist als die maximale Hubkraft des Linearantriebs.

Eine baulich besonders bevorzugte Ausgestaltung der Erfindung besteht schließlich darin, dass das rotorfeste Getriebeelement des Schraubengetriebes im Innenraum des Hohlwellenrotors angeordnet ist, was sich vor allem bei den beengten Einbauverhältnisse einer Spritzgießmaschine empfiehlt, wo im Innenraum des Hohlwellenrotors ein dem Elektromotor nachgeschaltetes Spindelgetriebe zum Hubantrieb der Plastifiziereinheit untergebracht wird.

Die Erfindung wird nunmehr anhand mehrerer Ausführungsbeispiele in Verbindung mit den Zeichnungen näher erläutert. Diese zeigen in stark schematisierter Darstellung:
- **Fig. 1**: einen elektromechanischen Linearantrieb nach einem ersten Ausführungsbeispiel der Erfindung mit einem Notlauflager im Längsschnitt;
- **Fig. 2**: eine der Fig. 1 entsprechende Darstellung eines weiteren Ausführungsbeispiels mit einem aerodynamischen Radiallager als Notlaufsicherung; und
- **Fig. 3 und 4**: ein weiteres Ausführungsbeispiel mit einer Notlaufsicherung in Form dreier, am offenen Rotorende in Umfangsrichtung verteilt angeordneter Kleinlager im Längsschnitt und in der Aufsicht.

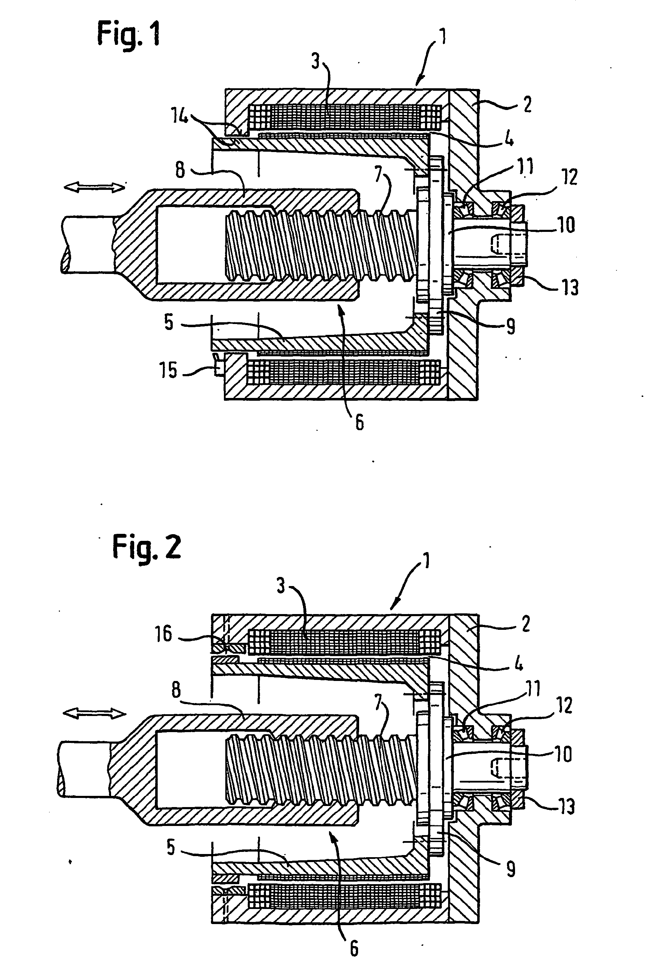

Der in Fig. 1 gezeigte, elektromechanische Linearantrieb enthält als Hauptbestandteile einen elektrischen Rotationsmotor 1, bestehend aus einem im Motorgehäuse 2 angeordneten Stator 3 und einem mit diesem über einen engen Luftspalt 4 magnetisch gekoppelten Hohlwellenrotor 5 großen Durchmessers zum Antrieb eines insgesamt mit 6 bezeichneten Spindelgetriebes, welches im Innenraum des Hohlwellenrotors 5 untergebracht ist und aus einer mit dem Rotor 5 koaxial zu diesem drehfest verbundenen Spindelwelle 7 und einer hülsenförmigen, mit der Spindelwelle 7 schraubenförmig zusammenwirkenden Spindelmutter 8 besteht, welche - gegen Drehung gesichert - die Rotationsbewegung der Spindelwelle 7 in eine Axialbewegung umsetzt und die Hubsteuerung der (nicht gezeigten) Plastifizierschnecke einer Spritzgießmaschine übernimmt.

An seinem durch die Stirnwand 9 verschlossenen Ende ist der Hohlwellenrotor 5 mit einem im Durchmesser reduzierten, axial nach außen vorstehenden Lagerzapfen 10 versehen und über zwei in Zapfenlängsrichtung voneinander beabstandete Zapfenlager 11 und 12 nach Art einer fliegenden Lagerung drehbar am Motorgehäuse 2 abgestützt. Die beiden Lager 11, 12 sind als jeweils längs- und querkraftaufnehmende, in Axialrichtung gegensinnig wirkende Wälzlager, also etwa Kegel- oder Tonnenlager ausgebildet und durch einen Spannring 13 gegenseitig vorverspannt, wobei die Vorspannkraft größer als die maximale Hubkraft der Spindelmutter 8 eingestellt ist. Die beschriebene Lageranordnung 11, 12 garantiert einen auch unter wechselnden Axialbelastungen hochgradig zentrischen Rotorlauf.

Aufgrund von unvorhersehbaren Störeinflüssen und/oder elastischen Auslenkungen des frei auskragenden Hohlwellenrotors 5 kann es jedoch zu einem exzentrischen Rotorlauf, also etwa Schwingungserscheinungen am freien Rotorende, kommen, die, sollten sie die Magnetspaltgröße überschreiten, zu einer Beschädigung oder Zerstörung des elektromotorischen Antriebs führen würden. Um dies zu verhindern, ist am freien Rotorende ein Notlaufsystem vorgesehen. Dieses besteht gemäß Fig. 1 aus einem Notlauflager 14 in Form eines spielbehafteten Kontaktflächenpaares zwischen dem Motorgehäuse 2 einerseits und dem Rotorende andererseits, dessen Lagerspiel kleiner als der Magnetspalt 4 bemessen ist. Auf diese Weise wird sichergestellt, dass der Rotor 5 bei einer kritischen Auslenkung im Bereich der Magnetpolanordnungen nicht gegen den Stator 3 anläuft, wobei zur Störfallüberwachung zusätzlich ein (nicht gezeigter) elektrischer Steuerkreis vorgesehen sein kann, der auf einen mechanischen Kontakt der Notlaufflächen 14 oder - mit Hilfe eines Thermoschalters - auf eine reibungsbedingte Erwärmung des Notlauflagers 14 anspricht und dann den Elektromotor 1 stromlos schaltet.

Eine Variante der Notlaufsicherung besteht gemäß Fig. 1 darin, dass am Motorgehäuse 2 im Bereich des freien Rotorendes ein Kontaktsensor 15 in einem Abstand zum Außenumfang des Rotors 5 angeordnet ist, welcher ebenfalls kleiner als der Magnetspalt 4 bemessen ist, derart, dass der Kontaktsensor 15 wiederum bei einer kritischen Rotorauslenkung anspricht und dann den Elektromotor 1 abschaltet.

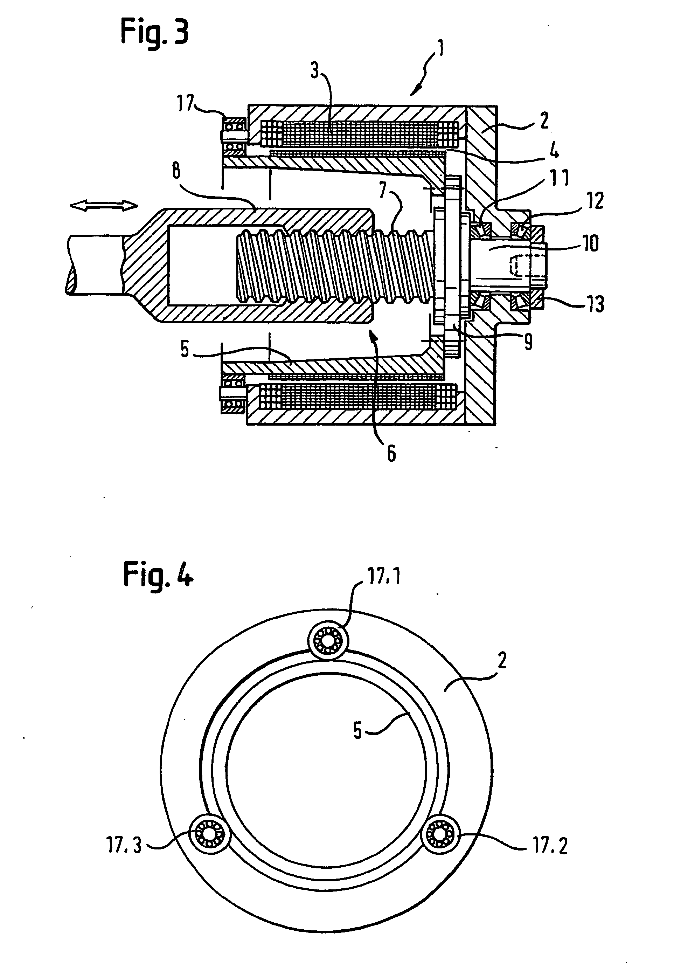

In den Fig. 2-4 sind weitere Ausführungsformen einer Notlaufsicherung gezeigt, nämlich in Fig. 2 ein zwischen Motorgehäuse 2 und Rotorende angeordnetes, fluid-, vorzugsweise aerodynamisches Notlauflager 16 und in den Fig. 3 und 4 eine Notlaufsicherung in Form dreier spielbehafteter, in Umfangsrichtung des Rotors 5 gleichförmig verteilter Kugellager 17.1 bis 17.3 vergleichsweise geringen Durchmessers. Die Notlauflager 16, 17 sind wiederum während des normalen Rotorlaufs nicht belastet, sondern nur bei einer kritischen Rotorauslenkung wirksam und müssen auch dann nur die dynamischen Auslenkkräfte abstützen.

## Patentansprüche

1. Elektromechanischer Linearantrieb, insbesondere für eine Spritzgießmaschine, mit einem Elektromotor (1) einschließlich eines einseitig offenen Hohlwellenrotors (5) und einem nachgeschalteten, die Drehbewegung des Hohlwellenrotors (5) in eine Linearbewegung umsetzenden Schraubengetriebe (6),
**dadurch gekennzeichnet, dass**
der Hohlwellenrotor (5) während des normalen Rotorlaufs nur einseitig an seinem durch eine Stirnwand verschossenen Ende über einen axial von der Stirnwand abstehenden, zentralen Lagerzapfen (10) drehbar am Motorgehäuse (2) abgestützt ist, dass der Lagerzapfen (10) an mindestens zwei in Zapfenlängsrichtung voneinander beabstandeten, gegensinnig zueinander längs- und jeweils querkraftaufnehmenden, axial vorverspannten Einzellagern (11, 12) drehbar am Motorgehäuse (2) abgestützt ist, und dass im Bereich des offenen Rotorendes eine bei einer exzentrischen Rotorauslenkung ansprechende Notlaufsicherung (14, 15, 16, 17) vorgesehen ist.

2. Elektromechanischer Linearantrieb nach Anspruch 1, **dadurch gekennzeichnet, dass**
die Notlaufsicherung aus einem radial spielbehafteten Notlauflager (14) mit einem kleiner als der Magnetspalt (4) zwischen Rotor (5) und Stator (3) des Elektromotors (1) bemessenen Lagerspiel besteht.

3. Elektromechanischer Linearantrieb nach Anspruch 1, **dadurch gekennzeichnet, dass**
die Notlaufsicherung aus einem im Bereich des offenen Rotorendes angeordneten, fluiddynamischen oder magnetischen Radiallager (16) besteht.

4. Elektromechanischer Linearantrieb nach einem der vorhergehenden Ansprüche, **dadurch gekennzeichnet, dass**
die Notlaufsicherung zumindest einen den Elektromotor (1) bei einer exzentrischen, jedoch unterhalb der Magnetspaltgröße zwischen Rotor (5) und Stator (3) liegenden Auslenkung des offenen Rotorendes stromlos schaltenden Kontaktsensor (15) enthält.

5. Elektromechanischer Linearantrieb nach Anspruch 1, **dadurch gekennzeichnet, dass**
die Notlaufsicherung aus mindestens drei in Umfangsrichtung des Hohlwellenrotors (5) gleichförmig versetzt zueinander angeordneten, den Rotor bei einer exzentrischen Auslenkung im Bereich des offenen Rotorendes radial abstützenden Querlagem (17) besteht.

6. Elektromechanischer Linearantrieb nach einem der vorhergehenden Ansprüche, **dadurch gekennzeichnet, dass**
die Vorspannkraft der Einzellager (11, 12) größer bemessen ist als die maximale Axialkraft des Linearantriebs.

7. Elektromechanischer Linearantrieb nach einem der vorhergehenden Ansprüche, **dadurch gekennzeichnet, dass**
das rotorfeste Getriebeelement (7) des Schraubengetriebes (6) im Innenraum des Hohlwellenrotors (5) angeordnet ist.

8. Elektromechanischer Linearantrieb nach Anspruch 7, **dadurch gekennzeichnet, dass**
das Schraubengetriebe (6) aus einem im Innenraum des Hohlwellenrotors (5) angeordneten Spindelgetriebe zum Hubantrieb der Plastifiziereinheit einer Spritzgießmaschine besteht.

## Claims

1. Electromechanical linear drive, in particular for an injection molding machine, the drive comprising an electric motor (1) with a hollow-shaft rotor (5), open on one side, and with a subsequent helical gear (6) which converts the rotational movement of the hollow-shaft rotor (5) into a linear movement,
**characterized in that**
during normal rotor operation, the hollow-shaft rotor (5), on one side, is supported on the motor housing (2), at the end thereof closed by an end wall, such as to rotate, by means of a central bearing spigot (10) projecting axially from the end wall; **in that** the bearing spigot (10) is supported on the motor housing (2) such as to rotate by means of at least two axially pre-tensioned, counter-rotating, individual bearings (11, 12), separated in the longitudinal direction and supporting longitudinal and transverse forces; and **in that**, in the region of the open end of the rotor, an emergency running safety device (14, 15, 16, 17) for an eccentric rotor displacement is provided.

2. Electromechanical linear drive according to claim 1, **characterized in that**
the emergency running safety device consists of an emergency running safety bearing (14) having a radial clearance, comprising a bearing clearance being less than the magnet gap (4) between the rotor (5) and the stator (3) of the electric motor (1).

3. Electromechanical linear drive according to claim 1, **characterized in that**
the emergency running safety device consists of a fluid dynamic or magnetic radial bearing (16) mounted at the open end of the rotor.

4. Electromechanical linear drive according to one of the preceding claims, **characterized in that**
the emergency running safety device comprises at least one contact sensor (15) which shuts off the electric motor (1) when sensing an eccentric deflection of the open end of the rotor, the deflection, however, being smaller than the magnet gap between the rotor (5) and the stator (3).

5. Electromechanical linear drive according to claim 1, **characterized in that**
the emergency running safety device consists of at least three radial bearings (17) which are uniformly distributed about the open end of the hollow-shaft rotor (5) and support the rotor (5) radially in the event of eccentric deflection at the open end of the rotor.

6. Electromechanical linear drive according to one of the preceding claims, **characterized in that**
the pre-tensioning force of the individual bearings (11, 12) is greater than the maximum axial thrust of the linear drive.

7. Electromechanical linear drive according to one of the preceding claims, **characterized in that** the gear element (7) of the helical gear (6) is arranged in the internal space of the hollow-shaft rotor (5), the gear element (7) being fixed concentrically in the rotor.

8. Electromechanical linear drive according to claim 7, **characterized in that**
the helical gear (6) consists of a spindle gear arranged in the internal space of the hollow-shaft rotor (5), for driving the plasticizing unit of an injection molding machine back and forth.

## Revendications

1. Entraînement linéaire électromécanique, en particulier pour une machine à injection comprenant un moteur électrique (1), y compris un rotor à arbre creux (5) ouvert sur un côté et un mécanisme à vis (6) placé en aval et transformant le mouvement de rotation du rotor à arbre creux (5) en un mouvement linéaire,
**caractérisé en ce que**
le rotor à arbre creux (5) est soutenu de façon rotative sur le carter moteur (2) pendant la marche normale du rotor uniquement sur un côté sur son extrémité fermée par une paroi avant au moyen d'un tourillon (10) central, dépassant axialement de la paroi avant, **en ce que** le tourillon (10) est soutenu de façon rotative sur le carter moteur (2) sur au moins deux paliers individuels (11, 12) espacés l'un de l'autre dans le sens longitudinal du tenon, absorbant réciproquement l'un par rapport à l'autre la force longitudinale et à chaque fois la force transversale, précontraints axialement et **en ce qu'**un blocage d'urgence (14, 15, 16, 17) réagissant en cas de déviation de rotor excentrique est prévu par la zone de l'extrémité de rotor ouverte.

2. Entraînement linéaire électromécanique selon la revendication 1, **caractérisé en ce que**
le blocage d'urgence comprend un palier d'urgence (14) entaché de jeu dans le sens radial avec un jeu de palier inférieur à la fente d'aimant (4) entre le rotor (5) et le stator (3) du moteur électrique (1).

3. Entraînement linéaire électromécanique selon la revendication 1, **caractérisé en ce que**,
le blocage d'urgence est constitué d'un palier radial (16) disposé dans la zone de l'extrémité de rotor ouverte, dynamique à fluide ou magnétique.

4. Entraînement linéaire électromécanique selon l'une quelconque des revendications précédentes, **caractérisé en ce que**,
le blocage d'urgence comprend au moins un capteur de contact (15) mettant hors courant le moteur électrique (1) dans le cas d'une déviation excentrique, mais située au-dessous de la grandeur de fente d'aimant entre le rotor (5) et le stator (3), de l'extrémité de rotor ouverte.

5. Entraînement linéaire électromécanique selon la revendication 1, **caractérisé en ce que**,
le blocage d'urgence est constitué d'au moins trois paliers transversaux (17) disposés de façon régulièrement décalée les uns par rapport aux autres dans le sens périphérique du rotor à arbre creux (5), soutenant radialement le rotor dans le cas d'une déviation excentrique dans la zone de l'extrémité de rotor ouverte.

6. Entraînement linéaire électromécanique selon l'une quelconque des revendications précédentes, **caractérisé en ce que,**
la force de pré-contrainte des paliers individuels (11, 12) est dimensionnée plus grande que la force axiale maximale de l'entraînement linéaire.

7. Entraînement linéaire électromécanique selon l'une quelconque des revendications précédentes, **caractérisé en ce que,**
l'élément de mécanisme (7), solidaire du rotor, du mécanisme à vis (6) est disposé dans l'espace intérieur du rotor à arbre creux (5).

8. Entraînement linéaire électromécanique selon la revendication 7, **caractérisé en ce que,**
le mécanisme à vis (6) est constitué d'un mécanisme à broche disposé dans l'espace intérieur du rotor à arbre creux (5) pour l'entraînement de levage de l'unité de plastification d'une machine à injection.
